## Europäisches Patentamt
### European Patent Office
### Office européen des brevets

(19)

(11) Veröffentlichungsnummer: **0 325 239**

**A1**

(12) **EUROPÄISCHE PATENTANMELDUNG**

(21) Anmeldenummer: **89100833.6**

(22) Anmeldetag: **19.01.89**

(51) Int. Cl.⁴: **E04D 13/16 , E04D 3/35 , C08J 9/42**

(30) Priorität: **19.01.88 DE 8800527 U**
**17.02.88 DE 8802006 U**

(43) Veröffentlichungstag der Anmeldung:
**26.07.89 Patentblatt 89/30**

(84) Benannte Vertragsstaaten:
**AT BE CH DE ES FR GB IT LI LU NL SE**

(71) Anmelder: **Roland-Werke Dachbaustoffe u.**
**Bauchemie Algostat GmbH & Co.**
**Zeppelinstrasse 1**
**D-2807 Achim(DE)**

(72) Erfinder: **Marzouki, Taieb**
**Rosenweg 8**
**D-2815 Langwedel-Etelsen(DE)**
Erfinder: **Thost, Ulrich E.**
**Birkenhof 2**
**D-2820 Bremen 70(DE)**

(74) Vertreter: **Möller, Friedrich, Dipl.-Ing. et al**
**Meissner, Bolte & Partner Patentanwälte**
**Hollerallee 73**
**D-2800 Bremen 1(DE)**

(54) **Abdeckelement.**

(57) Bekannte Abdeckelemente verfügen über eine Dämmung (12), die aus Kostengründen aus Polystyrolschaum gebildet ist. Nachteilig an Polystyrolschaum sind seine ungünstigen Eigenschaften im Brandfalle. Diese sollen durch die Erfindung verbessert werden.

Nach der Erfindung setzt sich die Dämmung (12) zusammen aus einer Dämmschicht (14) aus Polystyrolschaum und einer Brandschutzschicht (13) aus Phenolharzschaum, der über gute Eigenschaften im Brandfalle verfügt.

Das erfindungsgemäße Abdeckelement eignet sich besonders zur Abdeckung von Flachdächern, vorzugsweise zur Anordnung auf einer Tragschicht aus Stahlblech-Trapezprofilen (11).

Fig. 1

EP 0 325 239 A1

## Abdeckelement

Die Erfindung betrifft ein Abdeckelement gemäß dem Oberbegriff des Anspruchs 1.

Abdeckelemente der hier angesprochenen Art finden als Dämmschutz im Zusammenhang mit Leichtbau-Dachabdeckungen (Trapezblechdecken), aber auch als Wandverkleidungen Verwendung. Dazu werden die Abdeckungen bzw. Verkleidungen aus plattenförmigen oder rollfähigen Bahnen hergestellt. Aus Kostengründen wird für derartige Abdeckelemente üblicherweise Polystyrolschaum verwendet.

Nachteilig an Polystyrolschaum sind seine ungünstigen Eigenschaften im Brandfalle, da Polystyrolschaum leicht schmilzt und zum Tropfen neigt. Weiterhin entstehen unter Flammeneinwirkung brennbare Gase. Diese Nachteile führen zu erheblichen Beeinträchtigungen bei der Brandbekämpfung.

Hiervon ausgehend liegt der Erfindung die Aufgabe zugrunde, ein Abdeckelement der eingangs genannten Art so weiterzubilden, daß im Brandfalle die negativen Beeinträchtigungen durch das Dämmaterial weitestgehend verhindert werden.

Diese Aufgabe wird gelöst durch ein Abdeckelement gemäß dem Anspruch 1. Durch die erfindungsgemäße Zuordnung der Brandschutzschicht aus Phenolharzschaum zur Dämmschicht erfolgt ein flächendeckender Schutz dieser brandempfindlichen Dämmschicht und eventuell darüber angeordneter weiterer Abdeckschichten, indem die Dämmschicht - und ggf. weitere Abdeckschichten - im Brandfalle vor unmittelbaren Flammeinwirkungen von der Brandschutzschicht abgedeckt werden. Dabei eignet sich Phenolharzschaum besonders für die Brandschutzschicht, da dieser über eine hohe Temperaturbeständigkeit verfügt, nämlich weder sintert noch schmilzt. Gleichzeitig verfügt die Phenolharz-Brandschutzschicht noch über gute Dämmeigenschaften, die etwa mit der der Polystyrolschaum-Dämmschicht zu vergleichen ist. Die Brandschutzschicht hat somit mehrere Funktionen.

Zweckmäßigerweise ist die Brandschutzschicht derjenigen Seite der Dämmschicht zugeordnet, die im Brandfalle Flammeinwirkungen erwarten läßt, nämlich der zum Inneren eines abgedeckten Raumes gerichteten Seite der Dämmschicht, also bei einer Dachabdeckung der zur Tragschicht gerichteten Seite der Dämmschicht. Somit reicht es in der Regel aus, die Dämmschicht nur einseitig mit der Brandschutzschicht zu versehen. Alternativ kann jedoch auch der Dämmschicht eine beidseitige Brandschutzschicht zugeordnet sein, insbesondere bei Trennwänden bzw. Zwischendecken.

Weiterhin wird vorgeschlagen, die Brandschutzschicht mit einer Dämmschicht zu verbinden. Das erfindungsgemäße Abdeckelement hat somit die Eigenschaften eines Verbundmaterials, das sich als Ganzes wie herkömmliche Abdeckelemente verlegen läßt. Somit erfordert das erfindungsgemäße Abdeckelement keinen zusätzlichen Verlegungsaufwand.

Zweckmäßigerweise erfolgt die Verbindung der Brandschutzschicht mit der Dämmschicht durch einen Kleber, und zwar vorzugsweise einen Einkomponenten-Polyurethan-Kleber. Dieser läßt eine einfache, dauerhafte Verbindung sämtlicher Schichten des erfindungsgemäßen Abdeckelements zu, wobei der zur Bildung der Brandschutzschicht dienende Phenolharzschaum wegen seiner leichten Verklebbarkeit mit Polystyrolschaum in vorteilhafter Weise zu einer dauerhaften Verklebung beiträgt. Trotz der Verklebung läßt sich ein derart aufgebautes bahnförmiges Abdeckelement der erfindungsgemäßen Art auch noch rollen, ist also zur Herstellung von Rollbahnen noch geeignet.

Nach einem weiteren Vorschlag der Erfindung sind bei plattenförmigen Abdeckelementen die Ränder wenigstens der Brandschutzschicht mit einer umlaufenden Profilierung versehen. Im einfachsten Fall kann diese aus einem (einstufigen) L-förmigen Stufenfalz gebildet sein. Durch diese Profilierung wird verhindert, daß an den Stoßstellen nebeneinanderliegender plattenförmiger Abdeckelemente bzw. nebeneinander verlegter streifenbahnförmiger Abdeckelemente im Falle eines Brandes die entstehende Hitze oder sogar Flammen durch die Stoßnaht ungehindert an die zu schützende Dämmstoffschicht aus Polystyrolschaum bzw. Dachabdichtung gelangen kann.

Gegenüberliegende (parallele) Ränder der einzelnen Abdeckelemente sind nach einem weiteren Vorschlag zwar mit gleichförmigen Profilierungen gleicher Abmessungen versehen, jedoch sind diese spiegelverkehrt. Dadurch lassen sich entsprechende Ränder benachbarter Abdeckelemente unter Bildung einer labyrinthförmigen Naht verbinden, die das Hindurchtreten von Hitze bzw. Flammen durch die Stoß-bzw. Nahtstellen benachbarter Brandschutzschichten einfach und wirkungsvoll verhindert. Selbstverständlich können anstatt der Stufenfalz auch Fugensicherungen mit anderer geometrischer Gestaltung Verwendung finden.

Weiter wird vorgeschlagen, die Brandschutzschicht um ein Vielfaches dünner als die Dämmschicht auszubilden. Dadurch tritt nur eine unwesentliche Verteuerung des erfindungsgemäßen Abdeckelements durch die zusätzliche Brandschutzschicht aus naturgemäß im Vergleich zum Polystyrolschaum teuren Phenolharzschaum auf.

Einen besonders wirksamen Schutz bietet eine Brandschutzschicht, deren Phenolharzschaum mit einem schaumbildenden (Brandschutz-)Zusatz versehen ist. Dieser füllt die Poren des Phenolharzschaums im Brandfalle aus, wodurch eine noch bessere Widerstandsfähigkeit gegen Hitzeeinwirkung selbst bei relativ dünner Brandschutzschicht erzielt wird. Gegebenenfalls kann zusätzlich auch die Dämmschicht mit einem (Brandschutz-)Zusatz versehen sein.

Ein Ausführungsbeispiel des erfindungsgemäßen Abdeckelements wird nachfolgend anhand der Zeichnung näher erläutert. In dieser zeigt:

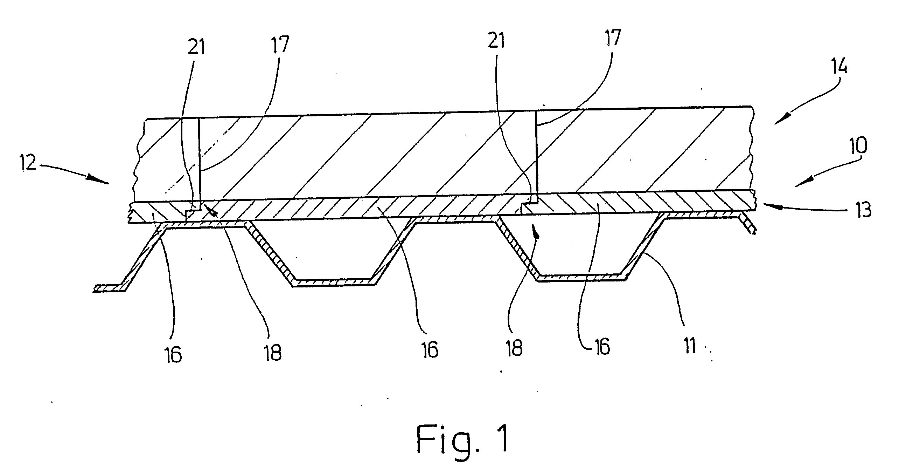

Fig. 1 auf einer Tragschicht einer Dachabdeckung angeordnete Abdeckelemente,

Fig. 2 einen vergrößert dargestellten Ausschnitt aus der Fig. 1 im Bereich zweier zusammengesetzter Abdeckelemente, und

Fig. 3 eine Draufsicht auf meherere zusammengesetzte Abdeckelemente.

Das nachfolgend beschriebene Ausführungsbeispiel bezieht sich auf eine Dachabdeckung 10. Diese weist eine untere Tragschicht aus einem Stahlblech-Trapezprofil 11 und eine darüber angeordnete Dämmung 12 auf. Die Dämmung 12 ist vorzugsweise lose auf das Stahlblech-Trapezprofil 11 aufgelegt. Zwischen der Dämmung 12 und Stahlblech-Trapezprofil 11 kann eine hier nicht gezeigte Dampfsperre angeordnet sein. Auf der Dämmung 12 kann ggf. auch noch eine nicht gezeigte Abdichtbahn angeordnet sein.

In erfindungsgemäß besonderer Weise ist die Dämmung 12 ausgebildet. Diese setzt sich nämlich zusammen aus einer unteren, zum Stahlblech-Trapezprofil 11 gerichteten Brandschutzschicht 13 und einer darauf angeordneten Dämmschicht 14. Die Dämmschicht 14 und die Brandschutzschicht 13 sind im vorliegenden Ausführungsbeispiel miteinander verbunden, und zwar durch einen Kleber, insbesondere einen Einkomponenten-Polyurethankleber 15. Alternativ ist es denkbar, die Brandschutzschicht 13 auf die Dämmschicht 14 direkt aufzuschäumen. Es kann dann die Schicht aus dem Einkomponenten-Polyurethankleber 15 entfallen.

Im vorliegenden Ausführungsbeispiel besteht die Dämmung 12 aus einer Vielzahl zusammengesetzter plattenförmiger Abdeckelemente 16 mit einer hier rechteckförmigen Grundfläche. Zur Bildung einer durchgehenden Dämmung sind die Abdeckelemente 16 an verzahnten Stoßflächen 17 zusammengesetzt.

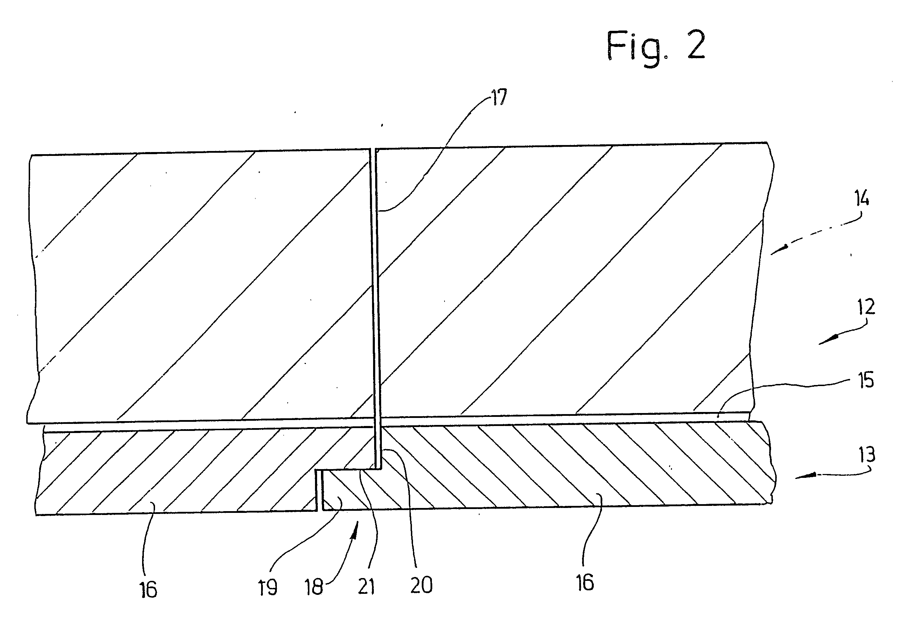

Die Verzahnung der Stoßflächen 17 wird gebildet durch eine Profilierung der Brandschutzschicht 13 an den Abdeckelementen 16. Dazu ist die Brandschutzschicht 13 jedes Abdeckelements 16 umlaufend profiliert, wobei die Profilierung hier als Stufenfalz 18 ausgebildet ist. Wie insbesondere die Fig. 2 erkennen läßt, wird der Stufenfalz 18 gebildet aus einem etwa rechteckförmigen Vorsprung 19 und einer darüberliegenden, ebenfalls rechteckförmigen Nut 20, die etwa den Abmessungen des Vorsprungs 19 entspricht. Zusammen weisen der Vorsprung 19 und die darüberliegende Nut 20 eine Höhe auf, die etwa der Dicke der Brandschutzschicht 13 entspricht. Zwischen dem Vorsprung 19 und der Nut 20 entsteht so eine im Bereich der halben Dicke der Brandschutzschicht 13 parallel zur Ebene derselben (horizontal) verlaufende Anlagefläche 21.

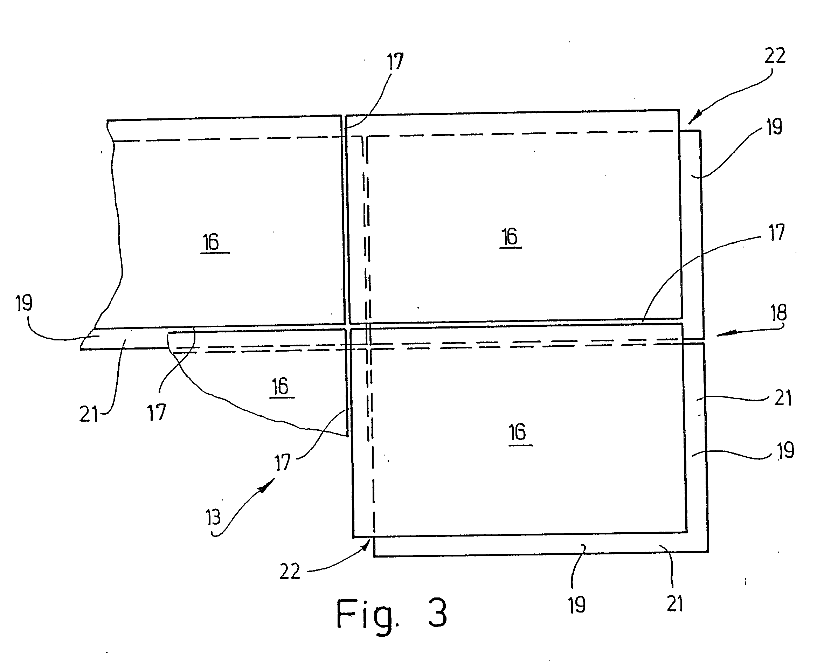

Wie die Fig. 2 und 3 erkennen lassen, ist der Stufenfalz 18 an allen Rändern der Brandschutzschichten 13 gleichermaßen ausgebildet, jedoch an gegenüberliegenden, parallelen Rändern mit unterschiedlicher Relativlage versehen, nämlich spiegelverkehrt. Dadurch liegen dann - wie die Fig. 3 besonders deutlich erkennen läßt - an einem (schmalen) Rand und daran angrenzendem (langen) Rand die Vorsprünge 19 im Bereich der unteren Hälfte der Brandschutzschicht 13, während an den übrigen (gegenüberliegenden) Rändern die Vorsprünge 19 im Bereich der oberen Hälfte der Brandschutzschicht 13 angeordnet sind. Zwei diagonal gegenüberliegende Eckbereiche jedes Abdeckelements 16 verfügt über quadratische Ausnehmungen 22, deren Kantenlänge der Breite des Vorsprungs 19 bzw. der Nut 20 entsprechen. Somit kann man sich (in Draufsicht gemäß der Fig. 3 gesehen) jede Brandschutzschicht 13 aus zwei gleich großen rechteckigen Grundkörpern zusammengesetzt denken, indem bezüglich auf zwei rechtwinklig verlaufende, aneinander anschließende Ränder um die Breite der Nut 20 bzw. des Vorsprungs 19 versetzt zueinander zusammengefügt sind, wobei jeder Grundkörper etwa die halbe Dikke der gesamten Brandschutzschicht 13 aufweist. Dadurch lassen sich die plattenförmigen Abdeckelemente 17 bei entsprechender Relativlage zueinander zu einer flächendeckenden Dämmung 12 zusammensetzen, wie aus der Fig. 3 ersichtlich ist. Aus dieser Figur wird auch deutlich, daß die (horizontalen) Anlageflächen 21 der Stufenfalze 18 Labyrinthe in den Stoßflächen 17 bilden, die einen unmittelbaren Angriff der infolge Brandeinwirkung entstehenden Hitze oder gar Flam men an der hitzeempfindlichen Dämmschicht 14 bzw. der Dachabdichtung verhindern.

Das Dickenverhältnis der einzelnen Schichten der Dämmung 12 ist derart gewählt, daß die Brandschutzschicht 13 um ein Mehrfaches dünner als die Dämmschicht 14 ist, nämlich nur 10 - 30 % der Dicke der Dämmschicht 14 aufweist. Bei einem Abdeckelement 16 mit einer Gesamtdicke von beispielsweise 100 mm hat es sich als vorteilhaft erwiesen, die Dämmschicht 14 70 mm und die Brandschutzschicht 13 30 mm dick auszubilden.

Alternativ hierzu kann die Dämmschicht 14 90 mm und die Brandschutzschicht 13 10 mm dick ausgebildet sein.

Als Material für die Dämmschicht 14 kommt preiswerter Schaumkunststoff, insbesondere Polystyrolschaum in Betracht. Da dieser unter Hitzeeinwirkung zum Abtropfen und zur Freisetzung brennbarer Gase neigt, besteht die Brandschutzschicht 13 aus einem diese Eigenschaft nicht aufweisenden Material, nämlich erfindungsgemäß Phenolharzschaum.

Besonders vorteilhaft ist es, die Brandschutzschicht 13 mit einem schaumbildenden (Brandschutz-)Zusatz zu versehen. Dieser wird erst nach Zufuhr von Wärme wirksam und ist so ausgewählt, daß er erst oberhalb der Verarbeitungstemperatur des Phenolharzes reagiert, wodurch zusätzliche Schaumbildung die Poren des Phenolharzschaumes schließt. Zweckmäßigerweise liegt die Reaktionstemperatur des schaumbildenden (Brandschutz-)Zusatzes zwischen 180° bis 200° C, bzw. etwas oberhalb davon.

Der schaumbildende (Brandschutz-)Zusatz ist vor der Verarbeitung mit dem Phenolharz pulverförmig und besteht aus einem Kohlenstofflieferanten, einem Treibmittel, einem Schaumstabilisator und ggf. Bindemittel. Als Kohlenstofflieferant kommen vorzugsweise Pentaerythrit, Dextrin oder Stärke (Weizenstärke bzw. Kartoffelstärke) in Betracht.

Das Treibmittel, das als Gerüst für den Kohlenstofflieferanten dient, kann aus Harnstoff, Melamin oder Dicyandiamid bestehen. Als Schaumstoffstabilisator kommen Phosphate, insbesondere Ammoniumpolyphosphat, in Betracht. Das Bindemittel betsteht vorzugsweise aus Polyvenylacetatcopolymer. Ggf. kann das Bindemittel entfallen.

Bei dem Verfahren zu Herstellung der Brandschutzschicht 13 wird der schaumbildende (Brandschutz-)Zusatz zunächst zum Phenolharz hinzugegeben und dann homogen mit diesem vermischt. Danach wird das Phenolharz mit Härter und Treibmittel versetzt und wiederum homogenisiert. Die so entstandene Paste wird mit Hilfe einer üblichen Vorrichtung bei 60° bis 70° C verschäumt und ausgehärtet. Anschließend kann die so hergestellte Brandschutzschicht 13 geschnitten und mit der Dämmschicht 14 verbunden werden. Auch ist es denkbar, den verschäumten - noch nicht ausgehärteten -Phenolharzschaum unmittelbar auf die Dämmschicht 14 etc. aufzubringen.

Der in der Brandschutzschicht 13 enthaltene schaumbildende (Brandschutz-)Zusatz ist nach Abschluß des eben beschriebenen Herstellungsverfahrens noch nicht aktiviert, sondern im Phenolharz eingeschlossen. Der (Brandschutz-)Zusatz wird als Pulver und in einer Menge von etwa 20 % (Gewichtsprozent), bezogen auf die Menge des Phenolharzes vor dem Zusatz des Härters und des Treibmittels, dem Phenolharz hinzugegeben. Erst bei starker Wärmeeinwirkung auf den Phenolharzschaum bzw. auf die Dachabdeckung 10 wird der schaumbildende (Brandschutz-)Zusatz aktiviert und werden so die Poren des Phenolharzschaums geschlossen.

Die Dachabdeckungen 10 mit (Brandschutz-)Zusatz können in der üblichen Weise verarbeitet werden, sind aber im Brandfalle über einen längeren Zeitraum unbrennbar und glimmen nicht nach.

In einem anderen Verfahren zur Herstellung der Brandschutzschicht 13 wird der schaumbildende (Brandschutz-)Zusatz bereits bei der Herstellung der Dachabdeckung 10 aktiviert. Dadurch sind die Poren von Anfang an geschlossen, so daß auch äußerst schnell auftretende Flammeneinwirkung, d. h. vor Ablauf der Reaktionszeit des schaumbildenden (Brandschutz-)Zusatzes, die Brandschutzschicht 13 und die darüber befindliche Dämmschicht 14 nicht verbrennen können.

## Ansprüche

1. Abdeckelement, insbesondere für Dächer, mit wenigstens einer auf einer Tragschicht (Stahlblech-Trapezprofil 11) anzuordnenden Dämmschicht (14), vorzugsweise aus geschäumten Polystyrol, **dadurch gekennzeichnet,** daß wenigstens einer Seite der Dämmschicht (14) eine Brandschutzschicht (13) aus Phenolharzschaum zugeordnet ist.

2. Abdeckelement nach Anspruch 1, dadurch gekennzeichnet, daß die Brandschutzschicht (13) der zur Tragschicht (Stahlblech-Trapezprofil 11) gerichteten Unterseite der Dämmschicht (14) zugeordnet ist.

3. Abdeckelement nach Anspruch 1 oder 2, dadurch gekennzeichnet, daß die Brandschutzschicht (13) mit der Dämmschicht (14) verbunden, vorzugsweise verklebt ist, insbesondere durch einen Einkomponenten-Polyurethan-Kleber (15).

4. Abdeckelement nach Anspruch 1 oder 2, dadurch gekennzeichnet, daß die Brandschutzschicht (13) auf die Dämmschicht (14) aufgeschäumt ist.

5. Abdeckelement nach Anspruch 1 sowie einem oder mehreren der weiteren Ansprüche, dadurch gekennzeichnet, daß die Brandschutzschicht (13) um ein Mehrfaches dünner als die Dämmschicht (14) ist, vorzugsweise nur etwa 10 - 30 % der Dicke der Dämmschicht (14) aufweist.

6. Abdeckelement nach Anspruch 1 sowie einem oder mehreren der weiteren Ansprüche, dadurch gekennzeichnet, daß die Ränder der Brandschutzschicht (13) mit einer umlaufenden Profilierung versehen sind, wobei die Profilierung vorzugsweise durch einen Stufenfalz (18) gebildet ist.

7. Abdeckelement nach Anspruch 6, dadurch gekennzeichnet, daß die Stufenfalze (18) gegenüberliegender, paralleler Ränder der Brandschutzschicht (13) bei etwa gleicher Profilierung spiegelverkehrt zueinander verlaufen zum gegenseitigen Eingriff der entsprechende Relativlage zueinander aufweisenden Stufenfalze (18) benachbarter Abdeckelemente (16).

8. Abdeckelement nach Anspruch 1 sowie einem oder mehreren der weiteren Ansprüche, dadurch gekennzeichnet, daß mindestens die Phenolharzschaum-Brandschutzschicht (13) einen schaumbildenden (Brandschutz-)Zusatz zur Glimmhemmung enthält.

9. Abdeckelement nach Anspruch 8, dadurch gekennzeichnet, daß der schaumbildende (Brandschutz-)Zusatz aus einem Material besteht, das erst oberhalb der Verarbeitungstemperatur des Phenolharzes wirksam ist, insbesondere bei Temperaturen oberhalb von 180° bis 200° C, zum Ausschäumen der Poren wenigstens der Phenolharzschaum-Brandschutzschicht (13) im Brandfalle.

10. Abdeckelement nach Anspruch 8 oder 9, dadurch gekennzeichnet, daß der schaumbildende (Brandschutz-)Zusatz in einer Menge von 20 % (Gewichtsprozent), bezogen auf die Menge des Phenolharzes, im Phenolharzschaum der Phenolharzschaum-Brandschutzschicht (13) enthalten ist, vorzugsweise als Pulver.

11. Abdeckelement nach einem oder mehreren der Ansprüche 8 bis 10, dadurch gekennzeichnet, daß der schaumbildende Brandschutzzusatz aus einem Kohlenstofflieferanten, Treibmittel und Schaumstabilisator sich zusammensetzt, wobei als Kohlenstofflieferant vorzugsweise Pentaerythrit, Dextrin, Weizenstärke und/oder Kartoffelstärke, als Treibmittel vorzugsweise Harnstoff, Melamin oder Dicyandiamid und als Schaumstabilisator Phisphat, insbesondere Ammoniumphosphat, dient.

12. Abdeckelement nach Anspruch 11, dadurch gekennzeichnet, daß der schaumbildende (Brandschutz-)Zusatz zusätzlich ein Bindemittel, insbesondere Polyvenylacetatcopolymer, enthält.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 117 413  (GIEBEL)<br>* Seite 6, Absätze 3,4; Figur 1 *<br>--- | 1,2 | E 04 D   13/16<br>E 04 D   3/35<br>C 08 J   9/42 |
| Y | FR-A-2 274 580  (RETIF)<br>* Seite 2, Zeilen 22-36; Seite 3,<br>Zeilen 1,2,21-30,36-39; Seite 4, Zeilen<br>1,2,13-22; Seite 5, Zeilen 19-34; Seite<br>6, Zeilen 30-35; Seite 7, Zeilen 11-32;<br>Seite 8, Zeilen 16-32; Seite 9, Zeilen<br>2-15 * | 1,2 | |
| A | | 9,10 | |
| A | US-A-3 079 730  (DONEGAN)<br>* Spalte 3, Zeilen 63-71; Spalte 4,<br>Zeilen 13-27,44-58; Figuren 1,2,5 *<br>--- | 1-3,5-7 | |
| A | GB-A-1 042 762  (FARBWERKE HOECHST)<br>* Seite 1, Zeilen 63-86; Seite 2,<br>Zeilen 1-40 *<br>--- | 1,11,12 | |
| A | GB-A-2 052 306  (KEEN)<br>* Seite 1, Zeilen 19-65; Seite 2,<br>Zeilen 1-16; Seite 3, Zeilen 6-37 *<br>--- | 1,11,12 | **RECHERCHIERTE SACHGEBIETE (Int. Cl.4)** |
| A | FR-A-1 461 864  (HARTMEYER)<br>* Seite 1, Spalte 1, Absatz 5; Spalte<br>2, Absatz 1; Seite 3, Beispiel 1 *<br>--- | 1,11 | E 04 D<br>C 08 J |
| A,P<br>L | DE-A-3 700 339  (MARZOUKI)<br>* Insgesamt *(Von Interesse für die<br>Anerkennung des Prioritätsanspruches)<br>----- | 1,9,10,<br>11,12 | |

Der vorliegende Recherchenbericht wurde für alle Patentansprüche erstellt

| Recherchenort | Abschlußdatum der Recherche | Prüfer |
|---|---|---|
| DEN HAAG | 12-04-1989 | HENDRICKX X. |